# FASCICULE DE BREVET EUROPEEN

(11) **EP 3 810 557 B1**
(45) Date de publication et mention de la délivrance du brevet: **13.08.2025**
(21) Numéro de dépôt: 19745703.9
(22) Date de dépôt: 21.06.2019
(51) Int. Cl.: C03C 3/066, C03C 17/36, C03C 8/04, C03C 17/34

(54) **FEUILLE DE VERRE REVETUE D'UN EMPILEMENT DE COUCHES MINCES ET D'UNE COUCHE D'EMAIL**
MIT EINEM STAPEL DÜNNER SCHICHTEN BESCHICHTETE GLASSCHEIBE UND MIT EINER EMAILSCHICHT
GLASS SHEET COATED WITH A STACK OF THIN LAYERS AND WITH AN ENAMEL LAYER

(30) Priorité: 22.06.2018 FR 1855568
(43) Date de publication de la demande: 28.04.2021
(73) Titulaire: Saint-Gobain Glass France, 92400 Courbevoie (FR)
(72) Inventeur: MARIA, Juliette, 60200 Compiegne (FR); COHIN, Yann, 75018 Paris (FR); HUIGNARD, Arnaud, 60200 Compiegne (FR)
(74) Mandataire: Saint-Gobain Recherche
(86) Numéro de dépôt international: PCT/FR2019/051527
(87) Numéro de publication internationale: WO 2019/243755

(56) Documents cités:
- WO-A1-01/21540
- WO-A1-2007/028913
- WO-A1-2015/145073
- WO-A1-2019/106264
- WO-A1-96/41773

## Description

L'invention se rapporte au domaine des matériaux comprenant une feuille de verre revêtue d'un empilement de couches minces. De tels matériaux sont destinés à former ou à être incorporés dans des vitrages de bâtiment ou dans des parties d'appareils électroménagers, comme des portes de four.

Les empilements de couches minces confèrent diverses propriétés aux matériaux, par exemple des propriétés optiques (couches réfléchissantes ou au contraire antireflets), énergétiques (couches de contrôle solaire et/ou à faible émissivité) ou encore de conduction électrique (utilisées par exemple pour des vitrages chauffants).

Les feuilles de verre sont parfois revêtues, sur au moins une partie de leur surface, d'une couche d'émail. Un émail est un matériau minéral formé à partir d'une composition comprenant au moins un pigment et au moins une fritte de verre. Une fritte de verre se compose de fines particules d'un verre à bas point de fusion, qui sous l'effet d'un traitement thermique de cuisson se ramollit et adhère à la feuille de verre. On forme ainsi une couche minérale, généralement opaque, à forte résistance chimique et mécanique, adhérant parfaitement au verre en maintenant les particules de pigment. Les couches d'émail peuvent avoir une fonction décorative ou esthétique, mais aussi de protection.

Les couches d'émail peuvent par exemple être déposées à la périphérie de feuilles de verre utilisées dans des portes de four pour camoufler certaines zones du four. Des empilements à faible émissivité sont parfois disposés sous la couche d'émail afin de réduire les échanges thermiques avec l'extérieur du four. Il existe aussi dans le domaine du bâtiment des vitrages appelés « allèges », utilisés pour les façades d'immeubles, et dans lesquels la feuille de verre est entièrement recouverte d'une couche d'émail colorée et décorative. Des empilements de contrôle solaire sont parfois disposés sous la couche d'émail afin de limiter le réchauffement du bâtiment sous l'effet du rayonnement solaire. Les couches d'émail peuvent aussi être utilisées pour créer un certain design, en déposant l'émail sous forme de motifs quelconques, par exemple dans des applications en façade, en cloison, en paroi de douche etc... Le document WO 96/41773 A1 a pour but la préparation, pour l'impression des surfaces de verre, de pâtes d'impression à cuire ayant un plus grand domaine d'application et pouvant utiliser une plus grande variété de composants, en particulier pour ce qui concerne la possibilité d'utiliser des pigments colorés moins stable.

Les inventeurs ont pu mettre en évidence que dans le cas de l'utilisation d'émaux contenant du zinc et moins de 5% en poids d'oxyde de bismuth déposés sur des empilements de couches minces, l'aspect visuel de l'émail pouvait dépendre fortement de la température de cuisson. Typiquement, que ce soit dans le cas de l'émaillage du verre nu ou d'un verre revêtu d'un empilement de couches minces, il existe une température de cuisson minimale nécessaire pour obtenir une bonne cuisson de l'émail et un bon aspect visuel en réflexion. Pour le verre nu, la plage de températures de cuissons possibles est large, au sens où une augmentation de la température de cuisson de 50 ou 100°C au-delà de cette température de cuisson minimale ne modifie pas de manière substantielle l'aspect en réflexion de l'émail. En revanche, dans le cas d'un verre revêtu d'un empilement de couches minces, une augmentation parfois minime de la température de cuisson par rapport à la température de cuisson minimale peut conduire à une modification de l'aspect en réflexion. La plage de températures de cuisson possibles, appelée ΔT, est alors réduite. Ainsi, il a été observé que pour des empilements dont la dernière couche (ou l'une des dernières couches) était à base de nitrure de silicium, la plage ΔT pouvait être aussi faible que 5 ou 10°C.

De faibles plages ΔT sont préjudiciables du point de vue de la production industrielle car l'obtention de produits de teinte homogène nécessite l'emploi d'équipements de cuisson capables de chauffer la feuille de verre de manière très homogène. Même dans le cas d'équipements performants, les bords de la feuille de verre connaissent souvent des températures légèrement plus élevées que le centre, ce qui peut conduire à des hétérogénéités de teinte. Enfin, dans le cas d'empilements de couches ayant une faible émissivité, les zones dépourvues d'émail sont essentiellement chauffées par convection tandis que les zones recouvertes d'émail sont chauffées par convection et rayonnement. Les zones proches des zones dépourvues d'émail connaissent par conséquent des températures plus basses que les autres. Il est donc très difficile dans le cas de faibles plages ΔT d'obtenir industriellement des feuilles de verre parfaitement homogènes en termes d'aspect visuel.

L'invention a pour but de résoudre ces problèmes en proposant des empilements pour lesquels la plage ΔT est élevée, permettant de réduire les coûts de production industrielle.

A cet effet, l'invention a pour objet un matériau comprenant une feuille de verre revêtue sur au moins une partie d'une de ses faces d'un empilement de couches minces, comme dans la revendication 1.

L'invention a également pour objet un procédé de fabrication d'un matériau selon l'invention, comprenant le dépôt d'un empilement de couches minces sur au moins une partie d'une face d'une feuille de verre, puis le dépôt, sur au moins une partie de la surface dudit empilement d'une couche d'émail comprenant du zinc et moins de 5% en poids d'oxyde de bismuth.

Le matériau selon l'invention possède, de manière superposée, un empilement de couches minces puis une couche d'émail, cette dernière n'étant pas en contact avec la feuille de verre. La présence d'une couche de contact permet d'augmenter la plage ΔT et donc l'homogénéité visuelle du matériau.

La feuille de verre est de préférence plane, en particulier lorsque le matériau est destiné à des vitrages pour le bâtiment ou des portes de four, mais elle peut également être bombée. Dans ce dernier cas la feuille de verre est généralement plane au moment du dépôt de l'empilement de couches minces puis de la couche d'émail, et peut ensuite être bombée. Le verre est typiquement un verre silico-sodo-calcique, mais d'autres verres, par exemple des borosilicates ou des aluminosilicates peuvent également être employés. La feuille de verre est de préférence obtenue par flottage, c'est-à-dire par un procédé consistant à déverser du verre fondu sur un bain d'étain en fusion. La feuille de verre peut être renforcée mécaniquement, notamment durcie ou trempée thermiquement. Pour ce faire, la feuille de verre est réchauffée à une température d'environ 600°C ou au-delà, traitement pouvant conduire si on le souhaite à un bombage du verre, puis refroidie rapidement afin de créer à sa surface des contraintes de compression. La cuisson de l'émail a de préférence lieu durant ce traitement thermique. La feuille de verre peut être claire ou teintée, par exemple en vert, bleu, gris ou bronze. La feuille de verre présente de préférence une épaisseur comprise dans un domaine allant de 0,7 à 19 mm, notamment de 1 à 10 mm, particulièrement de 2 à 6 mm, voire de 2 à 4 mm.

La feuille de verre est de préférence revêtue de l'empilement de couches minces sur au moins 70%, notamment 80%, voire sur la totalité de la surface de la première face. Selon les applications l'empilement peut être revêtu par la couche d'émail sur au moins 80%, voire 90% de sa surface (cas des allèges), ou sur au plus 40%, notamment 30% et même 20%, voire 15% de sa surface, souvent à la périphérie de la feuille de verre (cas des portes de four, ou encore des vitrages incorporant une Marie-Louise). Dans le cas de motifs émaillés destinés à conférer un certain design, ce chiffre est typiquement compris entre 5 et 80%.

Par « contact », on entend dans le présent texte un contact physique. Par l'expression « à base de » on entend de préférence le fait que la couche en question comprend au moins 50% en poids du matériau considéré, notamment 60%, voire 70% et même 80% ou 90%. La couche peut même essentiellement consister ou consister en ce matériau. Par « essentiellement consister », il faut comprendre que la couche peut comprendre des impuretés sans influence sur ses propriétés. Les termes « oxyde » ou « nitrure » ne signifient pas nécessairement que les oxydes ou nitrures sont stœchiométriques. Ils peuvent en effet être sousstœchiométriques, sur-stœchiométriques ou stœchiométriques.

De préférence, la couche de contact comprend un oxyde d'au moins un élément choisi parmi l'aluminium, le silicium, le titane, le zinc, le zirconium, l'étain. La couche de contact peut comprendre un oxyde d'au moins deux ou trois de ces éléments, par exemple un oxyde de zinc et d'étain, ou un oxyde de silicium et d'aluminium.

La couche de contact est avantageusement une couche à base d'oxyde de silicium, plus particulièrement une couche consistant essentiellement en un oxyde de silicium. Lorsque la couche d'oxyde de silicium est déposée par pulvérisation cathodique elle contient généralement de l'aluminium, car il est d'usage de doper les cibles de silicium par de l'aluminium afin d'accélérer les vitesses de dépôt.

La couche de contact est de préférence obtenue par pulvérisation cathodique ou par un procédé sol-gel. Plus de détails sur ces procédés sont donnés dans la suite du texte.

La couche de contact présente de préférence une épaisseur physique d'au moins 10 nm, notamment 20 nm, 30 nm, 40 nm, voire 50 nm et même 80 ou 100 nm, ou encore 150 ou 200 nm. Cette épaisseur est de préférence d'au plus 2 µm, notamment 1 µm, voire 500 nm et même 100 nm. L'augmentation de l'épaisseur de la couche de contact est favorable à l'obtention de plages ΔT élevées.

L'empilement comprend de préférence au moins une couche à base d'un nitrure.

L'au moins une couche à base d'un nitrure comprend de préférence un nitrure d'au moins un élément choisi parmi l'aluminium, le silicium, le zirconium, le titane. Elle peut comprendre un nitrure d'au moins deux ou trois de ces éléments, par exemple un nitrure de silicium et de zirconium, ou un nitrure de silicium et d'aluminium. De façon préférée, la couche à base d'un nitrure est une couche à base de nitrure de silicium, plus particulièrement une couche consistant essentiellement en un nitrure de silicium. Lorsque la couche de nitrure de silicium est déposée par pulvérisation cathodique elle contient généralement de l'aluminium, car il est d'usage de doper les cibles de silicium par de l'aluminium afin d'accélérer les vitesses de dépôt.

L'au moins une couche à base d'un nitrure présente de préférence une épaisseur physique comprise dans un domaine allant de 2 à 100 nm, notamment de 5 à 80 nm, voire de 20 à 50 nm.

Les couches à base de nitrure sont couramment employées dans nombre d'empilements de couches minces car elles possèdent des propriétés de blocage avantageuses, en ce sens qu'elles évitent l'oxydation d'autres couches présentes dans l'empilement, notamment des couches fonctionnelles qui seront décrites ci-après. Les inventeurs ont toutefois pu mettre en évidence que la présence de ces couches, en particulier à proximité de la couche d'émail, était préjudiciable à l'obtention de plages ΔT élevées. L'invention est donc particulièrement utile pour les empilements contenant ce type de couches.

De préférence, au moins une couche à base d'un nitrure est en contact avec la couche de contact, ou éloignée de moins de 5 nm de la couche de contact. Les avantages de l'invention sont encore plus manifestes pour ces empilements.

L'empilement comprend de préférence au moins une couche fonctionnelle, notamment une couche fonctionnelle électro-conductrice, de contrôle solaire, ou à faible émissivité. La couche fonctionnelle est de préférence comprise entre deux couches minces diélectriques, dont une au moins est une couche à base de nitrure. D'autres couches diélectriques possibles sont par exemple des couches d'oxydes ou d'oxynitrures.

Au moins une couche fonctionnelle est avantageusement choisie parmi :
- les couches métalliques, notamment en argent ou en niobium,
- les couches d'un oxyde transparent conducteur, notamment choisi parmi l'oxyde d'indium et d'étain, les oxydes d'étain dopés (par exemple au fluor ou à l'antimoine) et les oxydes de zinc dopés (par exemple à l'aluminium ou au gallium), et
- les couches à base de nitrure de niobium.

Ces couches sont particulièrement appréciées pour leur faible émissivité ou leur capacité à filtrer le rayonnement solaire, ce qui confère aux vitrages d'excellentes propriétés d'isolation thermique. Les vitrages bas-émissifs permettent par temps chaud de réfléchir vers l'extérieur une partie du rayonnement solaire, et donc de limiter l'échauffement de l'intérieur des habitations, et le cas échéant de réduire les dépenses de climatisation. A l'inverse, par temps froid, ces vitrages permettent de conserver la chaleur au sein de l'habitation, et par conséquent de réduire l'effort énergétique de chauffage. Dans le cas des portes de four, les couches bas-émissives permettent de réduire les émissions de chaleur à l'extérieur du four, augmentant ainsi l'efficacité de ce dernier tout en limitant les risques de brûlures pour les utilisateurs.

Selon un mode de réalisation de l'invention, l'empilement de couches minces comprend de préférence au moins une couche d'oxyde d'indium et d'étain. Son épaisseur physique est de préférence comprise entre 30 et 200 nm, notamment entre 40 et 150 nm. Cette couche est avantageusement comprise entre deux couches à base de nitrure, notamment de nitrure de silicium. La couche de contact est de préférence à base d'oxyde de silicium.

Selon un autre mode de réalisation de l'invention, l'empilement de couches minces comprend au moins un couche d'argent, notamment une, deux ou trois couches d'argent. L'épaisseur physique totale en argent est de préférence comprise entre 3 et 30 nm, notamment entre 5 et 20 nm. La ou chaque couche d'argent est de préférence entourée de couches diélectriques, dont certaines sont à base de nitrure, notamment de nitrure de silicium.

Selon un autre mode de réalisation de l'invention, l'empilement de couches minces comprend une couche de niobium ou de nitrure de niobium. La couche fonctionnelle est de préférence entourée de couches diélectriques, dont certaines sont à base de nitrure, notamment de nitrure de silicium.

Alternativement, l'empilement peut ne pas comprendre de couche fonctionnelle. L'empilement peut ainsi, par exemple, comprendre une succession de couches minces dont aucune, à titre individuel, ne confère de fonction particulière, mais qui ensemble permettent d'obtenir des effets optiques, notamment par le biais d'interférences multiples. Il peut par exemple s'agir d'empilements antireflet ou au contraire d'empilements réfléchissants.

Au moins une partie de l'empilement de couches minces peut être déposée par diverses techniques connues, par exemple par dépôt chimique en phase vapeur (CVD), ou par pulvérisation cathodique, notamment assistée par champ magnétique (procédé magnétron).

Selon un mode de réalisation, la totalité de l'empilement de couches minces (y compris la couche de contact) est déposée par pulvérisation cathodique, notamment assistée par champ magnétique. Dans ce procédé, un plasma est créé sous un vide poussé au voisinage d'une cible comprenant les éléments chimiques à déposer. Les espèces actives du plasma, en bombardant la cible, arrachent lesdits éléments, qui se déposent sur la feuille de verre en formant la couche mince désirée. Ce procédé est dit « réactif » lorsque la couche est constituée d'un matériau résultant d'une réaction chimique entre les éléments arrachés de la cible et le gaz contenu dans le plasma. L'avantage majeur de ce procédé réside dans la possibilité de déposer sur une même ligne un empilement très complexe de couches en faisant successivement défiler la feuille de verre sous différentes cibles, ce généralement dans un seul et même dispositif.

Selon un autre mode de réalisation, la totalité de l'empilement de couches minces, à l'exception de la couche de contact, est déposée par pulvérisation cathodique, notamment assistée par champ magnétique. Dans ce cas, la couche de contact est de préférence déposée par procédé sol-gel. Dans ce dernier procédé, un sol contenant des précurseurs de la couche à produire est déposé sur la feuille de verre par divers moyens, tels que la pulvérisation, le rideau, l'enduction laminaire, le rouleau, la sérigraphie etc.... Le sol contient de préférence des précurseurs organométalliques de la couche à produire, par exemple de l'orthosilicate de tétraéthyle (TEOS). La couche est ensuite séchée puis recuite afin de la densifier. Ce procédé permet d'obtenir des couches de contact plus épaisses que par le procédé de pulvérisation cathodique. L'épaisseur physique de la couche de contact peut ainsi être d'au moins 100 nm, notamment 200 nm et même 500 nm, voire 1 µm et plus.

La couche d'émail est de préférence formée à partir d'une composition comprenant au moins un pigment et au moins une fritte de verre de borosilicate de zinc. La couche d'émail ne comprend pas d'oxyde de plomb. La teneur pondérale en oxyde de bismuth dans la couche d'émail est avantageusement d'au plus 4%, notamment 3%, voire 2%, et même 1%. Elle est de préférence nulle.

La composition d'émail comprend généralement en outre un médium organique, destiné à faciliter l'application de la composition sur le substrat ainsi que son adhésion temporaire à ce dernier, et qui est éliminé lors de la cuisson de l'émail. Le médium comprend typiquement des solvants, des diluants, des huiles et/ou des résines. Dans le présent texte on qualifie de « composition d'émail » la composition liquide qui est utilisée pour déposer, sur la feuille de verre, une couche d'émail humide. Le terme « couche d'émail » est utilisé pour qualifier la couche finale, après cuisson, tandis que le terme « couche d'émail humide » est utilisé pour décrire la couche d'émail avant cuisson.

La couche d'émail est de préférence déposée par sérigraphie. Pour ce faire, on dispose sur la feuille de verre un écran de sérigraphie, lequel comprend des mailles dont certaines sont obturées, puis on dépose la composition d'émail sur l'écran, puis on applique un racle afin de forcer la composition d'émail à traverser l'écran dans les zones où les mailles de l'écran ne sont pas obturées, de manière à former une couche d'émail humide.

Le dépôt de la couche d'émail comprend une étape de cuisson, de préférence à une température d'au moins 600 et même 650°C, et d'au plus 700°C, de préférence lors d'un traitement de bombage et/ou de trempe de la feuille de verre.

Les pigments comprennent de préférence un ou plusieurs oxydes choisis parmi les oxydes de chrome, de cuivre, de fer, de manganèse, de cobalt, de nickel. Il peut s'agir à titre d'exemple de chromates de cuivre et/ou de fer.

De préférence la couche d'émail est opaque, de teinte noire ou grise. Toute autre teinte est toutefois possible : blanche, rouge, bleue, verte, jaune etc... La couche d'émail peut recouvrir la totalité de la surface de la feuille de verre, ou encore être disposée en périphérie de la feuille de verre.

L'invention a également pour objet un vitrage, notamment une allège, ou une porte de dispositif électroménager comprenant au moins un matériau tel que décrit précédemment.

Le vitrage est de préférence un vitrage pour bâtiment. Il peut notamment s'agir d'une allège, d'une partie de façade, d'une cloison, d'une paroi de douche, comprenant un empilement de couches minces conférant des propriétés de basse émissivité et/ou de contrôle solaire ou des effets optiques particuliers. L'émail peut revêtir la totalité du vitrage (cas de l'allège) ou seulement une partie, soit pour dissimuler et/ou protéger des éléments situés derrière le vitrage, soit pour créer un design.

Le matériau selon l'invention peut être feuilleté à une autre feuille de verre au moyen d'un intercalaire de feuilletage, notamment en polyvinlybutyral (PVB). L'empilement de couches minces se trouve alors de préférence du côté de l'intercalaire. Dans ce cas, l'utilisation d'une couche de contact à base de silice est particulièrement avantageuse car la silice présente le même indice de réfraction que le PVB, de sorte qu'elle n'a pas d'impact sur l'optique du matériau final.

La porte de dispositif électroménager est de préférence une porte de four ou une porte de dispositif réfrigérant (froid positif ou négatif).

La porte de four comprend de préférence au moins un verre extérieur, proche de l'utilisateur, et un verre intérieur, proche de l'intérieur du four. Dans ce cas, le matériau selon l'invention peut être un verre intérieur, notamment revêtu d'un empilement à faible émissivité, ou un verre extérieur, notamment revêtu d'un empilement conférant des effets optiques, par exemple un empilement réfléchissant.

La porte de dispositif réfrigérant peut notamment être un simple vitrage ou un vitrage multiple, notamment un double vitrage. Le matériau selon l'invention, intégré à cette porte, est de préférence revêtu d'un empilement à faible émissivité.

Les exemples de réalisation qui suivent illustrent l'invention de manière non limitative.

### Exemple comparatif 1

Dans cet exemple comparatif, une feuille de verre clair sodocalcique a été revêtue par sérigraphie d'une couche d'émail noir. L'émail, à base de borosilicate de zinc, comprend (en poids) 8% de B₂O₃, 32% de SiO₂, 17% de ZnO, 4% de TiO₂, 2% d'Al₂O₃, 22% de Cr₂O₃ et 12% de CuO. La composition de l'émail est exempte d'oxyde de bismuth.

La plage ΔT a ensuite été évaluée de la manière suivante. Un échantillon est placé dans un four à gradient de manière à cuire l'émail à une température différente selon la zone de l'échantillon. Une mesure de la clarté L* en réflexion non-spéculaire en fonction de la zone permet d'évaluer l'amplitude de la plage ΔT.

La plage ΔT est supérieure à 50°C. Une valeur de L* inférieure à 5 (caractéristique d'une couleur noire) est obtenue.

### Exemple comparatif 2

L'exemple comparatif 2 se distingue du précédent en ce que la feuille de verre clair sodocalcique a été préalablement revêtue par pulvérisation cathodique magnétron d'un empilement de couches minces à faible émissivité constitué, à partir du verre, des couches suivantes : SiNₓ (40 nm) / NiCr (1 nm) / Ag (7 nm) / NiCr (0,5 nm) / SiNₓ (40 nm) / TiZrOₓ (3 nm).

La couche d'émail a donc été déposée en contact avec cet empilement de couches minces.

Dans ce cas la plage ΔT n'était que de 5°C. Des valeurs L* de 7 ont été obtenues, caractéristiques d'un noir moins profond que dans le cas de l'exemple comparatif 1.

### Exemple 1

L'exemple 1 se distingue de l'exemple comparatif 2 en ce qu'une couche de contact en silice déposée par un procédé sol-gel a été déposée sur l'empilement de couches minces. La couche de contact a été déposée par sérigraphie et son épaisseur était de 100 nm.

La plage ΔT était d'au moins 15°C. Des valeurs L* de 5 ont été obtenues.

### Exemple 2

Contrairement à l'exemple 1, la couche de contact en silice a été déposée par pulvérisation cathodique magnétron d'une cible de silicium dopée à l'aluminium dans un plasma réactif contenant de l'argon et de l'oxygène. L'épaisseur de la couche de contact était de 30 nm.

La plage ΔT était d'au moins 20°C. Des valeurs L* de 5 ont été obtenues.

Des résultats similaires ont été obtenus avec des épaisseurs de couche de contact de 50 et 70 nm.

### Exemple 3

Dans cet exemple, la feuille de verre clair sodocalcique a été préalablement revêtue par pulvérisation cathodique magnétron d'un empilement de couches minces de contrôle solaire constitué, à partir du verre, des couches suivantes : SiNₓ (10 nm) / Nb (30 nm) / SiNₓ (30 nm).

La couche de contact en silice a été déposée par pulvérisation cathodique magnétron d'une cible de silicium dopée à l'aluminium dans un plasma réactif contenant de l'argon et de l'oxygène. L'épaisseur de la couche de contact était selon les essais de 10 ou 30 nm.

La plage ΔT était d'au moins 20°C dans tous les cas. Des valeurs L* de 5 ont été obtenues.

L'utilisation d'une couche de contact a donc permis d'augmenter la plage de températures de cuisson utilisables et d'atteindre des teintes noires plus profondes.

## Revendications

1. Matériau comprenant une feuille de verre revêtue sur au moins une partie d'une de ses faces d'un empilement de couches minces, ledit empilement étant revêtu sur au moins une partie de sa surface d'une couche d'émail comprenant du zinc et moins de 5% en poids d'oxyde de bismuth et ne comprenant pas d'oxyde de plomb, ledit empilement comprenant en outre, en contact avec la couche d'émail, une couche, dite couche de contact, qui est à base d'un oxyde, l'épaisseur physique de ladite couche de contact étant d'au moins 5 nm.

2. Matériau selon la revendication 1, dans lequel la couche de contact comprend un oxyde d'au moins un élément choisi parmi l'aluminium, le silicium, le titane, le zinc, le zirconium, l'étain, notamment est une couche à base d'oxyde de silicium.

3. Matériau selon l'une des revendications précédentes, dans lequel la couche de contact est obtenue par pulvérisation cathodique ou par un procédé sol-gel.

4. Matériau selon l'une des revendications précédentes, dans lequel l'empilement de couches minces comprend au moins une couche à base d'un nitrure, notamment d'un nitrure d'au moins un élément choisi parmi l'aluminium, le silicium, le zirconium, le titane.

5. Matériau selon la revendication précédente, dans lequel au moins une couche à base d'un nitrure est en contact avec la couche de contact ou éloignée de moins de 5 nm de la couche de contact.

6. Matériau selon l'une des revendications précédentes, dans lequel la couche de contact présente une épaisseur physique d'au moins 10 nm, notamment d'au moins 20 nm.

7. Matériau selon l'une des revendications précédentes, tel que l'empilement comprend au moins une couche fonctionnelle, ladite couche fonctionnelle étant une couche fonctionnelle électro-conductrice, de contrôle solaire, ou à faible émissivité.

8. Matériau selon la revendication précédente, dans lequel au moins une couche fonctionnelle est choisie parmi les couches métalliques, notamment en argent ou en niobium, les couches d'un oxyde transparent conducteur, notamment choisi parmi l'oxyde d'indium et d'étain, les oxydes d'étain dopés et les oxydes de zinc dopés, et les couches à base de nitrure de niobium.

9. Matériau selon l'une des revendications précédentes, tel que la couche d'émail est formée à partir d'une composition comprenant au moins un pigment et au moins une fritte de verre de borosilicate de zinc.

10. Matériau selon l'une des revendications précédentes, tel que la couche d'émail est opaque, notamment de teinte noire ou grise, et recouvre la totalité de la surface de la feuille de verre, ou est disposée en périphérie de la feuille de verre.

11. Vitrage, notamment allège, ou porte de dispositif électroménager comprenant au moins un matériau selon l'une des revendications précédentes.

12. Procédé de fabrication d'un matériau selon l'une des revendications 1 à 10, comprenant le dépôt d'un empilement de couches minces sur au moins une partie d'une face d'une feuille de verre, puis le dépôt, sur au moins une partie de la surface dudit empilement d'une couche d'émail comprenant du zinc et moins de 5% en poids d'oxyde de bismuth et ne comprenant pas d'oxyde de plomb.

13. Procédé selon la revendication précédente, dans lequel au moins une partie de l'empilement de couches minces est déposée par pulvérisation cathodique.

14. Procédé selon l'une des revendications 12 et 13, dans lequel le dépôt de la couche d'émail comprend une étape de cuisson à une température d'au moins 600°C, notamment lors d'un traitement de bombage et/ou de trempe de la feuille de verre.

## Patentansprüche

1. Material, umfassend eine Glasscheibe, die auf mindestens einem Teil einer ihrer Flächen mit einem Stapel dünner Schichten beschichtet ist, wobei der Stapel auf mindestens einem Teil seiner Oberfläche mit einer Emailleschicht überzogen ist, die Zink und weniger als 5 Gewichtsprozent Wismutoxid umfasst und kein Bleioxid umfasst, wobei der Stapel außerdem eine Schicht, eine so genannte Kontaktschicht, die auf einem Oxid basiert, umfasst, die in Kontakt mit der Emailleschicht steht, wobei die physikalische Dicke der Kontaktschicht mindestens 5 nm beträgt.

2. Material nach Anspruch 1, wobei die Kontaktschicht ein Oxid mindestens eines Elements, das ausgewählt ist aus Aluminium, Silizium, Titan, Zink, Zirkonium, Zinn, umfasst, insbesondere eine Schicht basierend auf Siliziumoxid ist.

3. Material nach einem der vorstehenden Ansprüche, wobei die Kontaktschicht durch Kathodenzerstäubung oder durch ein Sol-Gel-Verfahren erhalten wird.

4. Material nach einem der vorstehenden Ansprüche, wobei der Stapel dünner Schichten mindestens eine Schicht basierend auf einem Nitrid umfasst, insbesondere einem Nitrid mindestens eines Elements, das ausgewählt ist aus Aluminium, Silizium, Zirkonium, Titan.

5. Material nach dem vorstehenden Anspruch, wobei mindestens eine Schicht basierend auf einem Nitrid mit der Kontaktschicht in Kontakt steht oder weniger als 5 nm von der Kontaktschicht entfernt ist.

6. Material nach einem der vorstehenden Ansprüche, wobei die Kontaktschicht eine physikalische Dicke von mindestens 10 nm, insbesondere mindestens 20 nm, aufweist.

7. Material nach einem der vorstehenden Ansprüche, wobei der Stapel mindestens eine Funktionsschicht umfasst, wobei die Funktionsschicht eine elektrisch leitfähige Funktionsschicht, eine Sonnenschutzschicht oder eine Schicht mit niedrigem Emissionsvermögen ist.

8. Material nach dem vorstehenden Anspruch, wobei mindestens eine Funktionsschicht ausgewählt ist aus den Metallschichten, insbesondere aus Silber oder aus Niob, den Schichten aus einem transparenten leitfähigen Oxid, das insbesondere ausgewählt ist aus Indium- und Zinnoxid, dotierten Zinnoxiden und dotierten Zinkoxiden, und den Schichten basierend auf Niobiumnitrid.

9. Material nach einem der vorstehenden Ansprüche, wobei die Emailleschicht aus einer Zusammensetzung gebildet ist, die mindestens ein Pigment und mindestens eine Zink-Borosilikat-Glasfritte umfasst.

10. Material nach einem der vorstehenden Ansprüche, wobei die Emailleschicht opak, insbesondere schwarz oder grau gefärbt, ist und die gesamte Oberfläche der Glasscheibe bedeckt, oder am Umfang der Glasscheibe angeordnet ist.

11. Verglasung, insbesondere Brüstung, oder Tür eines Haushaltsgeräts, umfassend mindestens ein Material nach einem der vorstehenden Ansprüche.

12. Verfahren zur Herstellung eines Materials nach einem der Ansprüche 1 bis 10, umfassend die Abscheidung eines Stapels dünner Schichten auf mindestens einem Teil einer Fläche einer Glasscheibe, dann die Abscheidung einer Emailleschicht auf mindestens einem Teil der Oberfläche des Stapels, die Zink und weniger als 5 Gewichtsprozent Wismutoxid umfasst und kein Bleioxid umfasst.

13. Verfahren nach dem vorstehenden Anspruch, wobei zumindest ein Teil des Stapels dünner Schichten durch Kathodenzerstäubung abgeschieden wird.

14. Verfahren nach einem der Ansprüche 12 und 13, wobei das Abscheiden der Emailleschicht einen Einbrennschritt bei einer Temperatur von mindestens 600 °C umfasst, insbesondere während einer Biege- und/oder Härtungsbehandlung der Glasscheibe.

## Claims

1. A material comprising a glass sheet coated on at least part of one of its faces with a stack of thin layers, said stack being coated on at least part of its surface with an enamel layer comprising zinc and less than 5% by weight of bismuth oxide and not comprising lead oxide, said stack further comprising, in contact with the enamel layer, a layer, called contact layer, which is based on an oxide, the physical thickness of said contact layer being at least 5 nm.

2. The material as claimed in claim 1, wherein the contact layer comprises an oxide of at least one element selected from aluminum, silicon, titanium, zinc, zirconium, tin, in particular is a silicon oxide-based layer.

3. The material as claimed in one of the preceding claims, wherein the contact layer is obtained by sputtering or by a sol-gel process.

4. The material as claimed in one of the preceding claims, wherein the stack of thin layers comprises at least one layer based on a nitride, in particular a nitride of at least one element selected from aluminum, silicon, zirconium, titanium.

5. The material as claimed in the preceding claim, wherein at least one nitride-based layer is in contact with the contact layer or at a distance of less than 5 nm from the contact layer.

6. The material as claimed in one of the preceding claims, wherein the contact layer has a physical thickness of at least 10 nm, in particular of at least 20 nm.

7. The material as claimed in one of the preceding claims, such that the stack comprises at least one functional layer, in particular an electrically conductive, solar control, or low-emissivity functional layer.

8. The material as claimed in the preceding claim, wherein at least one functional layer is selected from metallic layers, in particular of silver or niobium, layers of a transparent conductive oxide, in particular selected from indium-tin oxide, doped tin oxides and doped zinc oxides, and layers based on niobium nitride.

9. The material as claimed in one of the preceding claims, such that the enamel layer is formed from a composition comprising at least one pigment and at least one zinc borosilicate glass frit.

10. The material as claimed in one of the preceding claims, such that the enamel layer is opaque, in particular of a black or gray color, and covers the entire surface of the glass sheet, or is placed on the periphery of the glass sheet.

11. A glazing, in particular a spandrel glass, or a door of a household appliance comprising at least one material as claimed in one of the preceding claims.

12. A process for manufacturing a material as claimed in one of claims 1 to 10, comprising the deposition of a stack of thin layers on at least part of one face of a glass sheet, and then the deposition on at least part of the surface of said stack of an enamel layer comprising zinc and less than 5% by weight of bismuth oxide.

13. The process as claimed in the preceding claim, wherein at least part of the stack of thin layers is deposited by sputtering.

14. The process as claimed in one of claims 12 and 13, wherein the deposition of the enamel layer comprises a firing step at a temperature of at least 600°C, in particular during a bending and/or tempering treatment of the glass sheet.
